# EUROPÄISCHE PATENTANMELDUNG

(11) **EP 4 650 190 A1**
(43) Veröffentlichungstag der Anmeldung: **19.11.2025**
(21) Anmeldenummer: 25172867.1
(22) Anmeldetag: 28.04.2025
(51) Int. Cl.: B60C 9/20, B60C 9/28

(54) **FAHRZEUGREIFEN**

(30) Priorität: 14.05.2024 DE 102024204459
(71) Anmelder: Continental Reifen Deutschland GmbH, 30175 Hannover (DE)
(72) Erfinder: Funk-Friedek, Sascha, 30175 Hannover (DE); Römer, Justus, 30175 Hannover (DE); Menz, Rüdiger, 30175 Hannover (DE); Strübel, Christian, 30175 Hannover (DE); Brüggemann, Carina, 30175 Hannover (DE)
(74) Vertreter: Continental Corporation

(57) **Zusammenfassung**

Die Erfindung betrifft einen Fahrzeugreifen für einen PKW, Van oder SUV mit einem Gürtelverband (2) mit genau drei aufeinanderliegenden Gürtellagen (2a, 2b, 2c), wobei die Festigkeitsträger der ersten Gürtellage (2a) zur Umfangsrichtung unter einem ersten Winkel (α) von 18° bis 45° verlaufen.

Der zweite Winkel (β), unter welchem die Festigkeitsträger der zweiten Gürtellage (2b) zur Umfangsrichtung verlaufen, und der dritte Winkel (γ), unter welchem die Festigkeitsträger der dritten Gürtellage (2c) zur Umfangsrichtung verlaufen, ist jeweils um zumindest 5° kleiner ist als der erste Winkel (α), unter welchem die Festigkeitsträger der ersten Gürtellage (2a) zur Umfangsrichtung verlaufen,
wobei die Festigkeitsträger der zweiten Gürtellage (2b) bezüglich der Umfangsrichtung gleichsinnig geneigt zu den Festigkeitsträgern der ersten Gürtellage (2a) und
die Festigkeitsträger der dritten Gürtellage (2c) bezüglich der Umfangsrichtung gegensinnig geneigt zu den Festigkeitsträgern der ersten Gürtellage (2a) verlaufen.

## Beschreibung

Die Erfindung betrifft einen Fahrzeugreifen für einen PKW, Van oder SUV mit einer Karkasseinlage aus in eine Karkassgummierung eingebetteten, textilen Festigkeitsträgern, insbesondere Textilkorden, einem Gürtelverband mit genau drei aufeinanderliegenden Gürtellagen - einer radial inneren, ersten Gürtellage, einer zweiten Gürtellage und einer radial äußeren, dritten Gürtellage - wobei die Gürtellagen jeweils aus in eine Gürtelgummierung eingebetteten, parallel zueinander verlaufenden Festigkeitsträgern, insbesondere Stahlkorden oder Stahlmonofilamenten, bestehen, wobei die Festigkeitsträger der ersten Gürtellage zur Umfangsrichtung unter einem ersten Winkel von 18° bis 45°, die Festigkeitsträger der zweiten Gürtellage zur Umfangsrichtung unter einem zweiten Winkel und die Festigkeitsträger der dritten Gürtellage zur Umfangsrichtung unter einem dritten Winkel verlaufen.

Ein derartiger Fahrzeugreifen, welcher ein PKW-Fahrzeugluftreifen in Radialbauart ist, ist aus der DE 10 2010 038 199 A1 bekannt. Dieser Fahrzeugreifen weist eine Karkasseinlage mit Verstärkungsfäden aus einem textilen Material und einen Gürtelverband mit drei Gürtellagen auf. Die erste und die zweite Gürtellage bestehen jeweils aus in eine Gürtelgummierung eingebetteten Stahlmonofilamenten, welche zur Umfangsrichtung unter einem Winkel von 12° bis 45° verlaufen, wobei die Stahlmonofilamente der ersten Gürtellage bezüglich der Umfangsrichtung gegensinnig geneigt zu den Stahlmonofilamenten der zweiten Gürtellage verlaufen. Die Stahlmonofilamente der ersten Gürtellage verlaufen zur Umfangsrichtung vorzugsweise unter einem Winkel von 28° sowie rechtssteigend. Die Stahlmonofilamente der zweiten Gürtellage verlaufen zur Umfangsrichtung vorzugsweise unter einem Winkel von 28° sowie linkssteigend. Die dritte Gürtellage weist Monofilamente auf, welche zur Umfangsrichtung unter einem Winkel von 50° bis 90°, insbesondere von 60°, verlaufen und insbesondere Stahlkorde oder Stahlmonofilamente sind. Ferner kann eine Gürtelbandage vorgesehen sein. Dieser Fahrzeugreifen soll einen rollwiderstandsoptimierte Gürtelkonstruktion aufweisen, die sowohl die Seitenführungskräfte auf einem hohen Niveau hält als auch den Plungertest besteht.

Es ist bekannt, dass fortlaufend Bestrebungen bestehen, bei Kraftfahrzeugen den Wirkungsgrad weiter zu verbessern. Der Wirkungsgrad ist das Verhältnis zwischen der abgegebenen Bewegungsenergie und der zugeführten Leistung und gibt daher in erster Linie Auskunft über die Leistungsflüsse durch den Fahrzeugreifen bei angetriebenem Fahrzeugrad (Felge mit Fahrzeugreifen). Die Leistungszufuhr erfolgt dabei über den jeweiligen Motor (Elektromotor oder Verbrennungsmotor). Im Fall eines angetriebenen Fahrzeugrades herrscht an diesem ein Antriebs- bzw. ein Bremsmoment, welches über den Fahrzeugreifen zur Felge übertragen wird. Ein Teil dieses Momentes wird durch Zugkräfte in der Karkasseinlage übertragen. Dabei wird die Karkassgummierung zwangsläufig auf Schub belastet, wodurch in der Folge eine Energiedissipation auftritt und der Wirkungsgrad sinkt. Bei Elektro- und Hybridfahrzeugen ist der Wirkungsgrad zusätzlich für die Rekuperation von Bedeutung, da bei einem höheren Wirkungsgrad beim Bremsen ein größerer Teil der Bremsenergie in die Batterie zurückgeführt wird.

Der Erfindung liegt die Aufgabe zugrunde, einen Fahrzeugreifen der eingangs genannten Art bereitzustellen, mittels welchem sich am jeweiligen Kraftfahrzeug ein höherer Wirkungsgrad realisieren lässt.

Gelöst wird die gestellte Aufgabe erfindungsgemäß dadurch, dass
dass der zweite Winkel, unter welchem die Festigkeitsträger der zweiten Gürtellage zur Umfangsrichtung verlaufen, und der dritte Winkel, unter welchem die Festigkeitsträger der dritten Gürtellage zur Umfangsrichtung verlaufen, jeweils um zumindest 5° kleiner ist als der erste Winkel, unter welchem die Festigkeitsträger der ersten Gürtellage zur Umfangsrichtung verlaufen,
wobei die Festigkeitsträger der zweiten Gürtellage bezüglich der Umfangsrichtung gleichsinnig geneigt zu den Festigkeitsträgern der ersten Gürtellage und
die Festigkeitsträger der dritten Gürtellage bezüglich der Umfangsrichtung gegensinnig geneigt zu den Festigkeitsträgern der ersten Gürtellage verlaufen.

Eine solche Gürtelkonstruktion sorgt für eine besonders hohe Steifigkeit des Fahrzeugreifens in Umfangsrichtung, wodurch die zugeführte Leistung (Antriebsleistung) über den Fahrzeugreifen effizienter als bisher, also unter Minimierung der auftretenden Leistungsverluste, zum Untergrund übertagen wird. In Analogie wird beim Einsatz des Fahrzeugreifens an einem Elektro- und Hybridfahrzeug die Rekuperation verbessert. Es lässt sich somit am jeweiligen Kraftfahrzeug ein höherer Wirkungsgrad realisieren.

Gemäß einer bevorzugten Ausführung ist der zweite Winkel, unter welchem die Festigkeitsträger der zweiten Gürtellage zur Umfangsrichtung verlaufen, um zumindest 7°, bevorzugt um zumindest 10°, kleiner als der erste Winkel, unter welchem die Festigkeitsträger der ersten Gürtellage zur Umfangsrichtung verlaufen. Dies trägt zusätzlich zu einer hohen Steifigkeit des Fahrzeugreifens in Umfangsrichtung und damit zur Realisierung eines hohen Wirkungsgrads bei.

Auch die weiteren, nachfolgend angeführten Maßnahmen tragen jeweils zusätzlich dazu bei, dass ein höherer Wirkungsgrad realisiert wird.

Es ist bevorzugt, wenn der zweite Winkel, unter welchem die Festigkeitsträger der zweiten Gürtellage zur Umfangsrichtung verlaufen, 20° bis 30°, insbesondere 23° bis 29°, bevorzugt 24° bis 28°, besonders bevorzugt 25° bis 27°, am meisten bevorzugt 26°, beträgt.

Gemäß einer weiteren bevorzugten Ausführung ist der dritte Winkel, unter welchem die Festigkeitsträger der dritten Gürtellage zur Umfangsrichtung verlaufen, um zumindest 7°, bevorzugt um zumindest 10°, kleiner als der erste Winkel, unter welchem die Festigkeitsträger der ersten Gürtellage zur Umfangsrichtung verlaufen.

Vorteilhaft ist es ferner, wenn dass der dritte Winkel, unter welchem die Festigkeitsträger der dritten Gürtellage zur Umfangsrichtung verlaufen, 20° bis 30°, insbesondere 23° bis 29°, bevorzugt 24° bis 28°, besonders bevorzugt 25° bis 27°, am meisten bevorzugt 26°, beträgt.

Außerdem ist es günstig, wenn der erste Winkel, unter welchem die Festigkeitsträger der ersten Gürtellage verlaufen, 30° bis 40°, bevorzugt 33° bis 37°, besonders bevorzugt 34° bis 36°, am meisten bevorzugt 35°, beträgt.

Gemäß einer weiteren bevorzugten Ausführungsform verlaufen die Festigkeitsträger der ersten Gürtellage linkssteigend.

Gemäß einer alternativen, weiteren bevorzugten Ausführungsform verlaufen die Festigkeitsträger der ersten Gürtellage rechtssteigend.

Eine weitere bevorzugte Ausführungsform sieht vor, dass die Gürtellagen in axialer Richtung jeweils eine zwischen ihren Gürtelkanten in axialer Richtung ermittelte Breite aufweisen, wobei die Breite der ersten Gürtellage größer ist als die Breite der zweiten und dritten Gürtellage.

Bei der letztgenannten bevorzugte Ausführungsform ist gemäß einer vorteilhaften Weiterentwicklung vorgesehen, dass die Breite der zweiten Gürtellage 85% bis 95% der Breite der ersten Gürtellage beträgt.

Bei der letztgenannten bevorzugte Ausführungsform ist gemäß einer weiteren vorteilhaften Weiterentwicklung vorgesehen, dass die Breite der dritten Gürtellage kleiner ist als die Breite der zweiten Gürtellage.

Bei der letztgenannten bevorzugte Ausführungsform ist gemäß einer weiteren Weiterentwicklung vorgesehen, dass die Breite der dritten Gürtellage 70% bis 95%, insbesondere bis zu 90%, der Breite der ersten Gürtellage beträgt.

Der Fahrzeugreifen ist vorzugsweise für eine Felge mit einem ganzzahligen Felgendurchmesser von 13 Zoll bis 24 Zoll vorgesehen und weist einen Traglastindex von 71 bis 126 auf.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen Querschnitt durch einen Fahrzeugluftreifen im Bereich des Laufstreifens und des Gürtelverbands mit einer Ausführungsform der Erfindung und
Fig. 2 eine Draufsicht auf Umfangsabschnitte von Gürtellagen des Gürtelverbands.

Gemäß der Erfindung ausgeführte Fahrzeugreifen sind Reifen für Personenkraftwagen (PKWs), Vans (Transporter) oder SUVs, sowie vorzugsweise Fahrzeugluftreifen, besonders bevorzugt Fahrzeugluftreifen in Radialbauart. PKW-, Van- und SUV-Reifen sind insbesondere für Felgen mit einem ganzzahligen Felgendurchmesser von 13 Zoll bis 24 Zoll, bevorzugt von 18 Zoll bis 23 Zoll, vorgesehen und weisen einen Traglastindex von insbesondere 71 bis 126 auf. Besonders bevorzugt wird der Fahrzeugreifen auf einer Antriebsachse montiert.

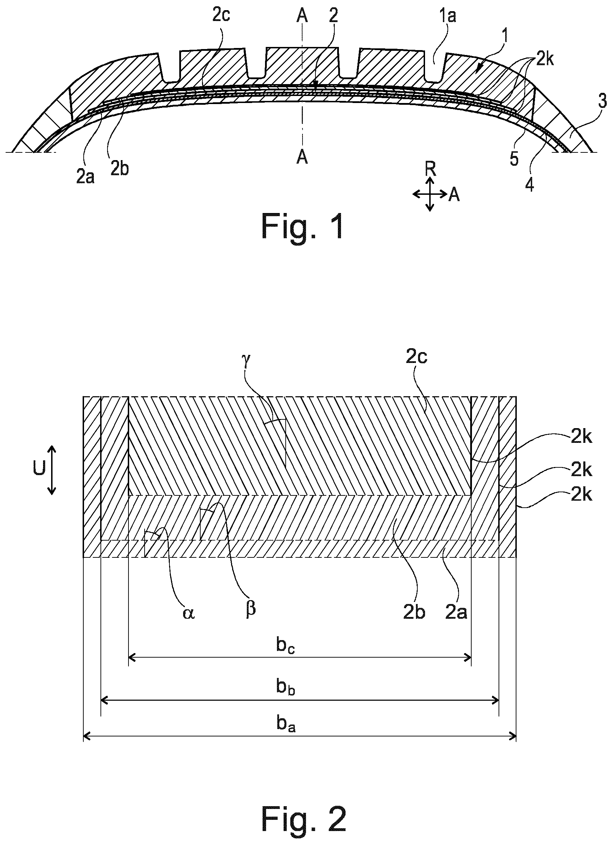

Fig. 1 zeigt einen Querschnitt eines Fahrzeugluftreifens, welcher ein PKW-Reifen in Radialbauart ist. Die radiale Richtung ist durch einen Doppelpfeil R, die axiale Richtung ist durch einen Doppelpfeil A und die Reifenäquatorialebene ist durch eine Linie A-A angedeutet. Unter der "axialen Richtung" wird die senkrecht zur Reifenäquatorialebene verlaufende Richtung verstanden. Unter der "radialen Richtung" wird die im in axialer Richtung ausgerichteten Querschnitt parallel zur Reifenäquatorialebene verlaufende Richtung verstanden.

Fig. 1 zeigt von den Bauteilen des Fahrzeugluftreifens einen profilierten Laufstreifen 1, einen radial innerhalb des Laufstreifens 1 befindlichen Gürtelverband 2, die radial äußeren Endabschnitte von zwei Seitenwänden 3 sowie Abschnitte einer Karkasseinlage 4 und einer luftdichten Innenschicht 5. Die Wulstbereiche sind nicht gezeigt und können in insbesondere bekannter Weise ausgeführt sein.

Der Laufstreifen 1, die Seitenwände 3, die Karkasseinlage 4 und die Innenschicht 5 können ebenfalls in insbesondere bekannter Weise gestaltet sein.

Der Laufstreifen 1 ist beim Ausführungsbeispiel einschichtig aufgebaut und enthält eine Rillen 1a umfassende Profilierung.

Die Seitenwände 3 schließen in bekannter Weise an den axial äußeren Enden des Laufstreifens 1 an.

Die Karkasseinlage 4 ist einlagig ausgeführt und besteht aus in Gummi eingebetteten Textilkorden, welche - bei einem Fahrzeugluftreifen in Radialbauart - zur Umfangsrichtung unter einem Winkel von 90° orientiert sind.

Der Gürtelverband 2 besteht aus einer radial inneren, ersten Gürtellage 2a, einer zweiten Gürtellage 2b und einer radial äußere, dritten Gürtellage 2c, wobei die Gürtellagen 2a, 2b, 2c jeweils zwei Gürtelkanten 2k aufweisen und jeweils aus in eine Gürtelgummierung eingebetteten, in jeder Gürtellage 2a, 2b, 2c parallel zueinander verlaufenden Festigkeitsträgern, insbesondere Stahlfestigkeitsträgern, daher aus Stahlkorden oder Stahlmonofilamenten, bestehen. Der Gürtelverband 2 ist, im in axialer Richtung ausgerichteten Querschnitt betrachtet, derart symmetrisch bezüglich der Reifenäquatorialebene (Linie A-A) ausgeführt, dass diese jede Gürtellage 2a, 2b, 2b in zwei Lagenhälften teilt.

Fig. 2 zeigt schematisch Umfangsabschnitte der Gürtellagen 2a, 2b, 2c. Die Festigkeitsträger der Gürtellagen 2a, 2b, 2c sind durch Striche angedeutet. Ferner ist die Umfangsrichtung des Fahrzeugreifens durch einen Doppelpfeil U gekennzeichnet.

Die erste Gürtellage 2a ist von sämtlichen Gürtellagen 2a, 2b, 2c in axialer Richtung am breitesten ausgeführt und weist eine zwischen ihren Gürtelkanten 2k in axialer Richtung ermittelte Breite bₐ auf. Die Festigkeitsträger der ersten Gürtellage 2a verlaufen, in Draufsicht betrachtet, zur Umfangsrichtung unter einem Winkel α von 18° bis 45°, insbesondere von 30° bis 40°, bevorzugt von 33° bis 37°, besonders bevorzugt von 34° bis 36°, am meisten bevorzugt von 35°, sowie beim Ausführungsbeispiel linkssteigend, können alternativ jedoch auch rechtssteigend verlaufen. "Linkssteigend verlaufen" bedeutet, dass die Festigkeitsträger, in Draufsicht mit in vertikaler Richtung ausgerichteter Umfangsrichtung (Doppelpfeil U) betrachtet, derart zur Umfangsrichtung geneigt sind, dass sie von links unten nach rechts oben verlaufen. "Rechtssteigend verlaufen" bedeutet, dass die Festigkeitsträger, in Draufsicht mit in vertikaler Richtung ausgerichteter Umfangsrichtung (Doppelpfeil U) betrachtet, derart zur Umfangsrichtung geneigt sind, dass sie von rechts unten nach links oben verlaufen.

Die zweite Gürtellage 2b weist eine zwischen ihren Gürtelkanten 2k in axialer Richtung ermittelte Breite b_{b} von 85% bis 95% der Breite bₐ der ersten Gürtellage 2a auf und ist daher an jeder Gürtelkante 2k von der ersten Gürtellage 2a in axialer Richtung überragt. Die Festigkeitsträger der zweiten Gürtellage 2b verlaufen, in Draufsicht betrachtet, zur Umfangsrichtung unter einem Winkel β von 20° bis 30°, insbesondere von 23° bis 29°, bevorzugt von 24° bis 28°, besonders bevorzugt von 25° bis 27°, am meisten bevorzugt von 26°, sowie bezüglich der Umfangsrichtung gleichsinnig geneigt zu den Festigkeitsträgern der ersten Gürtellage 2a, wobei der Winkel β um zumindest 5°, insbesondere um zumindest 7°, bevorzugt um zumindest 10°, kleiner ist als der Winkel α der Festigkeitsträger der ersten Gürtellage 2a.

Die dritte Gürtellage 2c ist beim Ausführungsbeispiel in axialer Richtung schmäler ausgeführt als die zweite Gürtellage 2b, weist eine zwischen ihren Gürtelkanten 2k in axialer Richtung ermittelte Breite b_{c} von 70% bis 95%, insbesondere von bis zu 90%, der Breite bₐ der ersten Gürtellage 2a auf und ist daher an jeder Gürtelkante 2k von der zweiten Gürtellage 2b überragt. Die Festigkeitsträger der dritten Gürtellage 2c verlaufen, in Draufsicht betrachtet, zur Umfangsrichtung unter einem Winkel γ von 20° bis 30°, insbesondere von 23° bis 29°, bevorzugt von 24° bis 28°, besonders bevorzugt von 25° bis 27°, am meisten bevorzugt von 26°, und sind bezüglich der Umfangsrichtung gegensinnig zu den Festigkeitsträgern der ersten Gürtellage 2a und den Festigkeitsträgern der zweiten Gürtellage 2b geneigt, wobei der Winkel γ um zumindest 5°, insbesondere um zumindest 7°, bevorzugt um zumindest 10°, kleiner ist als der Winkel α der Festigkeitsträger der ersten Gürtellage 2a.

Die Erfindung ist auf das beschriebene Ausführungsbeispiel nicht beschränkt.

Der Fahrzeugreifen kann eine in insbesondere bekannter Weise ausgeführte Gürtelbandage aufweisen, welche sämtliche Gürtellagen 2a, 2b, 2c, vorzugsweise inklusive der Gürtelkanten 2k, bedeckt. Die Gürtelbandage besteht aus in einer Bandagegummierung eingebetteten, im Allgemeinen textilen, vorzugsweise aus Nylon gefertigten, Festigkeitsträgern und ist bevorzugt eine einlagige Spulbandage.

### Bezugszeichenliste

- 1: Laufstreifen
- 1a: Rille
- 2: Gürtelverband
- 2a: erste Gürtellage
- 2b: zweite Gürtellage
- 2c: dritte Gürtellage
- 2k: Gürtelkante
- 3: Seitenwand
- 4: Karkasseinlage
- 5: Innenschicht
- A: Doppelpfeil (axiale Richtung)
- A-A: Linie (Reifenäquatorialebene)
- bₐ, b_{b}, b_{c}: Breite
- R: Doppelpfeil (radiale Richtung)
- U: Doppelfeil (Umfangsrichtung)
- α, β, γ: Winkel

## Patentansprüche

1. Fahrzeugreifen für einen PKW, Van oder SUV mit einer Karkasseinlage (4) aus in eine Karkassgummierung eingebetteten, textilen Festigkeitsträgern, insbesondere Textilkorden, und einem Gürtelverband (2) mit genau drei aufeinanderliegenden Gürtellagen (2a, 2b, 2c) - einer radial inneren, ersten Gürtellage (2a), einer zweiten Gürtellage (2b) und einer radial äußeren, dritten Gürtellage (2c) - wobei die Gürtellagen (2a, 2b, 2c) jeweils aus in eine Gürtelgummierung eingebetteten, parallel zueinander verlaufenden Festigkeitsträgern, insbesondere Stahlkorden oder Stahlmonofilamenten, bestehen, wobei die Festigkeitsträger der ersten Gürtellage (2a) zur Umfangsrichtung unter einem ersten Winkel (α) von 18° bis 45°, die Festigkeitsträger der zweiten Gürtellage (2b) zur Umfangsrichtung unter einem zweiten Winkel (β) und die Festigkeitsträger der dritten Gürtellage (2c) zur Umfangsrichtung unter einem dritten Winkel (γ) verlaufen,
**dadurch gekennzeichnet,**
- **dass** der zweite Winkel (β), unter welchem die Festigkeitsträger der zweiten Gürtellage (2b) zur Umfangsrichtung verlaufen, und der dritte Winkel (γ), unter welchem die Festigkeitsträger der dritten Gürtellage (2c) zur Umfangsrichtung verlaufen, jeweils um zumindest 5° kleiner ist als der erste Winkel (α), unter welchem die Festigkeitsträger der ersten Gürtellage (2a) zur Umfangsrichtung verlaufen,
- wobei die Festigkeitsträger der zweiten Gürtellage (2b) bezüglich der Umfangsrichtung gleichsinnig geneigt zu den Festigkeitsträgern der ersten Gürtellage (2a) und
- die Festigkeitsträger der dritten Gürtellage (2c) bezüglich der Umfangsrichtung gegensinnig geneigt zu den Festigkeitsträgern der ersten Gürtellage (2a) verlaufen.

2. Fahrzeugreifen nach Anspruch 1, **dadurch gekennzeichnet, dass** der zweite Winkel (β), unter welchem die Festigkeitsträger der zweiten Gürtellage (2b) zur Umfangsrichtung verlaufen, um zumindest 7°, bevorzugt um zumindest 10°, kleiner ist als der erste Winkel (α), unter welchem die Festigkeitsträger der ersten Gürtellage (2a) zur Umfangsrichtung verlaufen.

3. Fahrzeugreifen nach Anspruch 1 oder 2, **dadurch gekennzeichnet, dass** der zweite Winkel (β), unter welchem die Festigkeitsträger der zweiten Gürtellage (2b) zur Umfangsrichtung verlaufen, 20° bis 30°, insbesondere 23° bis 29°, bevorzugt 24° bis 28°, besonders bevorzugt 25° bis 27°, am meisten bevorzugt 26°, beträgt.

4. Fahrzeugreifen nach einem der Ansprüche 1 bis 3, **dadurch gekennzeichnet, dass** der dritte Winkel (γ), unter welchem die Festigkeitsträger der dritten Gürtellage (2c) zur Umfangsrichtung verlaufen, um zumindest 7°, bevorzugt um zumindest 10°, kleiner ist als der erste Winkel (α), unter welchem die Festigkeitsträger der ersten Gürtellage (2a) zur Umfangsrichtung verlaufen.

5. Fahrzeugreifen nach einem der Ansprüche 1 bis 4, **dadurch gekennzeichnet, dass** der dritte Winkel (γ), unter welchem die Festigkeitsträger der dritten Gürtellage (2c) zur Umfangsrichtung verlaufen, 20° bis 30°, insbesondere 23° bis 29°, bevorzugt 24° bis 28°, besonders bevorzugt 25° bis 27°, am meisten bevorzugt 26°, beträgt.

6. Fahrzeugreifen nach einem der Ansprüche 1 bis 5, **dadurch gekennzeichnet, dass** der erste Winkel (α), unter welchem die Festigkeitsträger der ersten Gürtellage (2a) verlaufen, 30° bis 40°, bevorzugt 33° bis 37°, besonders bevorzugt 34° bis 36°, am meisten bevorzugt 35°, beträgt.

7. Fahrzeugreifen nach einem der Ansprüche 1 bis 6, **dadurch gekennzeichnet, dass** die Festigkeitsträger der ersten Gürtellage (2a) linkssteigend verlaufen.

8. Fahrzeugreifen nach einem der Ansprüche 1 bis 6, **dadurch gekennzeichnet, dass** die Festigkeitsträger der ersten Gürtellage (2a) rechtssteigend verlaufen.

9. Fahrzeugreifen nach einem der Ansprüche 1 bis 8, **dadurch gekennzeichnet, dass** die Gürtellagen (2a, 2b, 2c) in axialer Richtung jeweils eine zwischen ihren Gürtelkanten (2k) in axialer Richtung ermittelte Breite (bₐ, b_{b}, b_{c}) aufweisen, wobei die Breite (bₐ) der ersten Gürtellage (2a) größer ist als die Breite (b_{b}, b_{c}) der zweiten und dritten Gürtellage (2b, 2c).

10. Fahrzeugreifen nach Anspruch 9, **dadurch gekennzeichnet, dass** die Breite (b_{b}) der zweiten Gürtellage (2b) 85% bis 95% der Breite (bₐ) der ersten Gürtellage (2a) beträgt.

11. Fahrzeugreifen nach Anspruch 9 oder 10, **dadurch gekennzeichnet, dass** die Breite (b_{c}) der dritten Gürtellage (2c) kleiner ist als die Breite (b_{c}) der zweiten Gürtellage (2b).

12. Fahrzeugreifen nach einem der Ansprüche 9 bis 11, **dadurch gekennzeichnet, dass** die Breite (b_{c}) der dritten Gürtellage (2c) 70% bis 95%, insbesondere bis zu 90%, der Breite (bₐ) der ersten Gürtellage (2a) beträgt.

13. Fahrzeugreifen nach einem der Ansprüche 1 bis 12, **dadurch gekennzeichnet, dass** der Fahrzeugreifen für eine Felge mit einem ganzzahligen Felgendurchmesser von 13 Zoll bis 24 Zoll vorgesehen ist und einen Traglastindex von 71 bis 126 aufweist.
